# EUROPEAN PATENT APPLICATION

(11) **EP 1 855 035 A1**
(43) Date of publication of application: **14.11.2007**
(21) Application number: 07106422.4
(22) Date of filing: 18.04.2007
(51) Int. Cl.: F16J 15/34

(54) **Mechanical Seal**

(30) Priority: 10.05.2006 JP 2006131310
(71) Applicant: GMB Corporation, Shiki-gun, Nara 636-0295 (JP)
(72) Inventor: Okamoto, Makito, Shiki-gun Nara 636-0295 (JP); Yamanaka, Yusuke, Shiki-gun Nara 636-0295 (JP)
(74) Representative: TBK-Patent

(57) **Abstract**

A mechanical seal (MS) comprises a first case member (1) that is mounted on a rotatably supported rotatable shaft and that rotates together with the rotatable shaft, a second case member (2) that is mounted on a member supporting the rotatable shaft and that forms a space between the first case member (1) and the second case member (2), a first seal member (3) that is mounted on the first case member (1), an urging member (4) that is mounted on the second case member (2), a second seal member (5) that is arranged concentrically with the first seal member (3) and that is pushed against the first seal member (3) with being urged in an axial direction of the rotatable shaft by the urging member (4), and a transmitting member (6) that transmits an urging force of the urging member (4) to the second seal member (5), and the urging member (4) is arranged both concentrically with the second seal member (5) and near the second seal member (5) in its radial direction.

## Description

### BACKGROUND OF THE INVENTION AND RELATED ART STATEMENT

The present claimed invention relates to a mechanical seal used for a water pump of a water-cooled engine (hereinafter called as an engine) loaded on, for example, an automobile.

Conventionally, a water pump to circulate coolant of an engine between a radiator and a water jacket comprises a body mounted on a cylinder block of the engine, a bearing unit having a rotatable shaft and being fixed inside the body, an impeller mounted on an engine side end portion of the rotatable shaft, a mechanical seal that prevents the coolant from moving from the impeller side to the bearing unit side and a flange to mount a pulley for driving that is mounted on an outside end portion of the rotatable shaft projecting from the body.

For the water pump of this arrangement, the mechanical seal comprises a case, a plural seal members that is mounted inside the case and a spring that urges the seal members to be tightly attached each other. As a mechanical seal known is an arrangement wherein a volume of the seal member is reduced and a member constituting a case is engaged with a cutout portion of the seal member so as to effectively transmit the torque of the rotatable shaft to the seal member as described in the patent document 1.
Patent document 1: Japan Patent Laid-open Number 11-315935 Recently, however, since an automobile engine has an increased number of accessories and a size of an engine room is limited, the automobile engine is required to be downsized. Then it is also required that a cylinder block on which the water pump is mounted does not significantly distend outside partially. In this case, if the water pump is mounted on the cylinder block of the engine, a length of the mechanical seal in its axial direction becomes long. More specifically, since the mechanical seal becomes thick, a portion where an outer wall of the cylinder block distends outside becomes big. As a result, since a portion where a distance between the engine and the engine room becomes short is formed, the engine room has to be enlarged.

The present claimed invention intends to solve all of the problems.

### SUMMARY OF THE INVENTION

More specifically, the mechanical seal in accordance with this invention comprises a first case member that is mounted on a rotatably supported rotatable shaft and that rotates together with the rotatable shaft, a second case member that is mounted on a member supporting the rotatable shaft and that forms a space between the first case member and the second case member, a first seal member that is mounted on the first case member, an urging member that is mounted on the second case member, the urging member being arranged both concentrically with the second seal member and near the second seal member in its radial direction, a second seal member that is arranged concentrically with the first seal member and that is pushed against the first seal member with being urged in an axial direction of the rotatable shaft by the urging member, and a transmitting member that transmits an urging force of the urging member to the second seal member.

In accordance with this arrangement, the urging member is not arranged in series with the first seal member and the second seal member in a direction of its thickness. As a result, a thickness of the mechanical seal can be reduced. Then in case the mechanical seal is used for a water pump, since a distance between an impeller and a bearing can be shortened, it is possible to shorten a length of the water pump in a direction of a rotatable shaft.

In order to make it possible to assemble the mechanical seal effectively, it is preferable that the urging member locates outside of the second seal member. The urging member may have a characteristic of spring to restore its shape when a certain force is removed even though a shape of the urging member is deformed by the force, and may be a wave spring as being a press (compression) spring. In addition, the urging member may be a coil spring.

With the above-explained arrangement, since the urging member is not arranged in series with the first seal member and the second seal member in a direction of its thickness, a thickness of the urging member can be reduced.

### BRIEF DESCRIPTION OF THE DRAWINGS

Fig. 1 is a perspective view showing an embodiment of the present claimed invention.

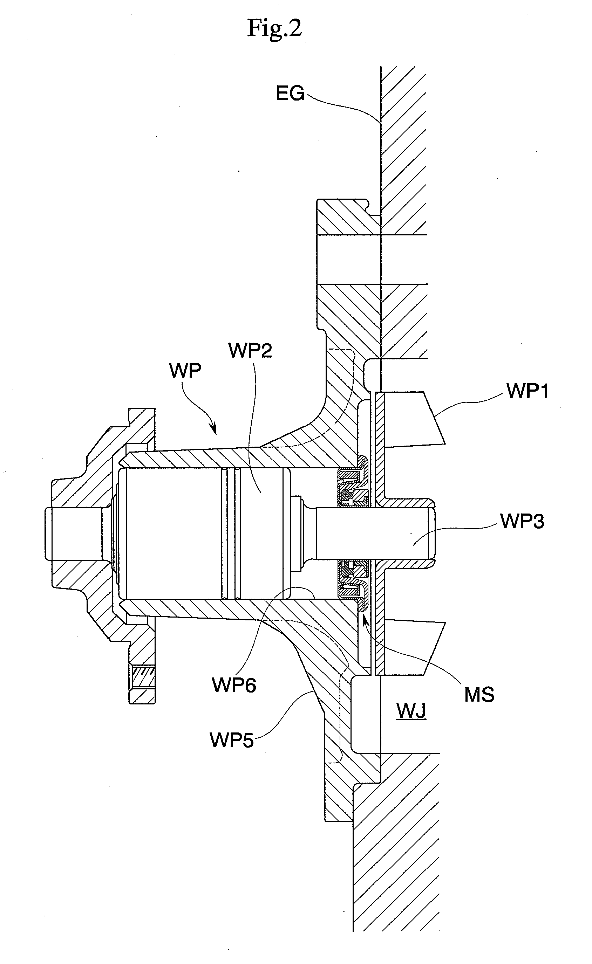

Fig. 2 is a cross-sectional view showing a used state of this embodiment.

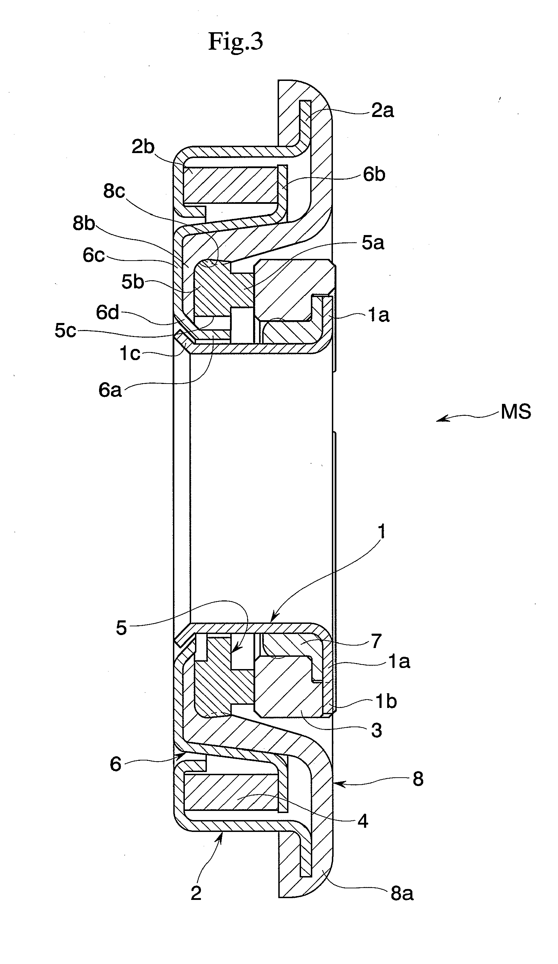

Fig. 3 is a cross-sectional view of this embodiment.

### DETAILED DESCRIPTION OF THE PREFERRED EMBODIMENTS

One embodiment of the present claimed invention will be explained with reference to drawings.

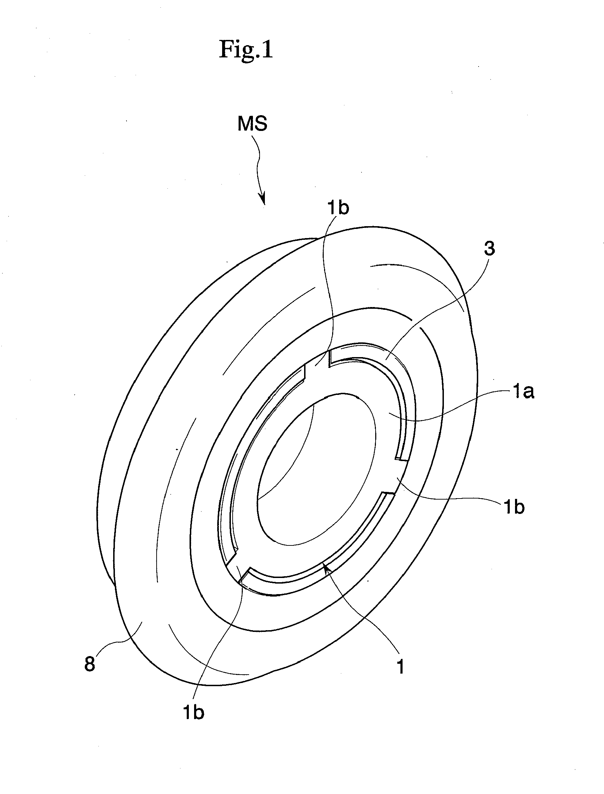

A mechanical seal MS is, as shown in Fig. 1, incorporated into a water pump WP of a water-cooled engine EG for automobiles. The mechanical seal MS is mounted on a rotatable shaft WP3 between an impeller WP1 of the water pump WP and a bearing WP2 thereof and seals a portion where the rotatable shaft WP3 is mounted so that coolant in a water jacket WJ of the engine EG does not reach the bearing WP2.

The mechanical seal MS comprises a first case member 1 that is mounted on the rotatable shaft WP3 rotatably supported by a pump body WP5 of the water pump WP and that rotates together with the rotatable shaft WP3, a second case member 2 that is mounted on the pump body WP5 as being a member supporting the rotatable shaft WP3 and that forms a space between the first case member 1 and the second case member 2, a first seal member 3 that is mounted on the first case member 1, a wave spring 4 as being an urging member that is mounted on the second case member 2, a second seal member 5 that is arranged concentrically with the first seal member 3 and that is pushed against the first seal member 3 with being urged toward an axis of the rotatable shaft WP3 by the wave spring 4, a transmitting member (a bridge) 6 that transmits the urging force of the wave spring 4 to the second seal member 2, an annular mounting member 7 that mounts the first seal member 3 on the first case member 1 and a bellows 8 that is mounted between the second case member 2 and the transmitting member 6. Each component constituting the mechanical seal MS is in a generally cylindrical shape or a generally annular shape and arranged so that a center of the generally cylindrical shape or a center of the generally annular shape coincides with an axial center of the rotatable shaft WP3.

The first case member 1 is in a cylindrical shape having an inside diameter generally the same as an outside diameter of the rotatable shaft WP3. A flange 1a is formed at one end portion of the first case member 1 and three mounting nails 1b projecting outside are separately formed at three portions of the flange 1a. The flange 1a is to mount the mounting member 7 and an outside diameter of the flange 1a is set to be smaller than an outside diameter of the first seal member 3. The mounting nails 1b prevent the first seal member 3 from falling off from the first case member 1. An inclining end portion 1c locating at an end opposite to the flange 1a of the first case member 1 is formed by folding the end of the first case member 1 outside, in other words, toward a direction opposite from the rotatable shaft WP3 so as to prevent the transmitting member 6 from falling off from the first case member 1. The mounting member 7 also serves as a buffer material to the first seal member 3 and is made of a material having elasticity such as, for example, a rubber.

The second case member 2 is made of a cylindrical member having a diameter bigger than that of the first case member 1. The second case member 2 has a mounting flange 2a that is formed at one end portion thereof and an annular concave portion 2b that accommodates the wave spring 4 and that is formed at the other end portion thereof. An outside diameter of the second case member 2 is generally the same as an inside diameter of a bearing part WP6 of the pump body WP5, and the mechanical seal MS is incorporated into the water pump WP by inserting the second case member 2 into the bearing part WP6. In addition, since the inside diameter of the second case member 2 is bigger than the outside diameter of the first case member 1, a space is formed between the first case member 1 and the second case member 2 when the second case member 2 is arranged concentrically with the first case member 1. Then the first seal member 3, the second seal member 5, the mounting member 7, the transmitting member 6, the wave spring 4 and the bellows 8 are arranged in the space.

The first seal member 3 is in an annular shape of a material, for example, ceramics having both durability and strength, and mounted on the flange 1a of the first case member 1 through the mounting member 7. The first seal member 3 rotates together with the first case member 1 in conformity with a rotation of the rotatable shaft WP3 in relation to the pump body WP5. The second seal member 5 is in an annular shape of a material, for example, carbon having high wear proof, and urged against the first seal member 3 by the wave spring 4 so as to closely contact to the first seal member 3 on a constant basis. The first seal member 3 and the second seal member 5 are arranged concentrically with a center of an axis of the rotatable shaft WP3 to overlap each other in a direction of the axis of the rotatable shaft WP3. The second seal member 5 is so arranged that an end portion 5b whose back faces an end portion 5a that closely contacts to the first seal member 3 is supported by the transmitting member 6 through the bellows 8. In this embodiment, the second seal member 5 is so arranged that the end portion 5b facing the bellows 8 is wider in its radial direction than the end portion 5a that closely contacts to the first seal member 3, and cutout portions 5c are formed at, for example, five positions of the second seal member 5. Each of the cutout portions 5c engages a nail 6a arranged at end portions of the transmitting member 6 with allowance.

The transmitting member 6 is in a generally cylindrical shape and comprises an outer flange 6b extending outward arranged at one end portion thereof and an inner flange 6c extending inward arranged at the other end portion thereof. The outer flange 6b has an area sufficient to hold the wave spring 4. The inner flange 6c has an area sufficient to support the second seal member 5 and has, for example, five nails 6a arranged in a spaced-apart state along a circumferential direction thereof. An inner circumferential portion 6d of the inner flange 6c is inclined inward so as to correspond to the inclining end portion 1c of the first seal member 1 and the inner circumferential portion 6d overlaps the inclining end portion 1c with a space when the transmitting member 6 is incorporated into the first case member 1.

A wave spring of well-known in this field can be used as the wave spring 4. The wave spring 4 is formed by winding a steel wavy thin plate spring in spirals and the wave spring 4 produces a force when compressed. One end portion of the wave spring 4 may be fixed to the annular concave portion 2b of the second case member 2. The wave spring 4 is arranged outside of the second seal member 5 in a spaced-apart state with a center of the wave spring 4 placed on a line passing a center of the second seal member 5, in other words, on the axial line of the rotatable shaft WP3.

The bellows 8 is arranged between the second case member 2 and the transmitting member 6, and prevents the coolant in the water jacket WJ from reaching the wave spring 4, accordingly prevents the coolant from reaching the bearing WP2 of the water jacket WJ. The bellows 8 is mounted on the second case member 2 with an outside edge portion 8a of the bellows 8 winding around the flange 2a of the second case member 2, and an inside edge portion 8b of the bellows 8 is supported between the second seal member 5 and the inner flange 6c of the transmitting member 6. An annular groove 8c is formed on an inner circumferential wall of the inside edge portion 8b, locating at a side of the transmitting member 6, of the bellows 8 and engages the second seal member 5. As a result, the second seal member 5 is held by the bellows 8 by inserting the second seal member 5 into the annular groove 8c when the mechanical seal MS is assembled.

With this arrangement, the mechanical seal MS is assembled with the following manner.

First, the mounting member 7 is mounted on the first seal member 3, and the first seal member 3 is incorporated into the first case member 1 by making use of the elasticity of the mounting member 7. Next, the bellows 8 is mounted on the transmitting member 6, and the second seal member 5 is mounted on the bellows 8 on which the transmitting member 6 is mounted by inserting the second seal member 5 into the annular groove 8c. The transmitting member 6, the bellows 8 and the second seal member 5, each of which is integrally formed, are incorporated into the first case member 1 into which the first seal member 3 is integrally formed. Then, the inclining end portion 1c of the first case member 1 is bended toward the transmitting member 6. This procedure integrates the transmitting member 6 into the first case member 1 in a rotatable state. More specifically, each of the second seal member 5 and the bellows 8 is not detached from the first case member 1 on which the first seal member 3 is mounted. Later, the second case member 2 on which the wave spring 4 is mounted is inserted into an assembled body comprising the first case member 1, the first seal member 3, the second seal member 5, the transmitting member 6 and the bellows 8 each of which is integrally formed with pushing the wave spring 4 against the outer flange 6b of the transmitting member 6. Then an assembling procedure of each member is completed by winding an outer circumferential portion of the bellows 8 around the flange 2a of the second case member 2.

As mentioned, after each of the first case member 1 and the second case member 2 is assembled respectively, the first case member 1 and the second case member 2 are connected. More specifically, the first case member 1 into which the first seal member 3 and the mounting member 7 are incorporated is connected to the second case member 2 into which the second seal member 5, the wave spring 4, the transmitting member 6 and the bellows 8 are incorporated with a procedure of inserting the inclining end portion 1c of the first case member 1 into inside of the inner circumferential portion 6d of the inner flange 6c of the transmitting member 6. In this state, although the first case member 1 moves toward a direction to be separated from the second case member 2 through the first seal member 3 and the second seal member 5 due to the wave spring 4, there is no chance that the first case member 1 comes off from the second case member 2 because the inclining end portion 1c of the first case member 1 makes a contact with the inner circumferential portion 6d of the inner flange 6c of the transmitting member 6.

Thus assembled mechanical seal MS is incorporated into the water pump WP in a state that the rotatable shaft WP3 is rotatably mounted on the pump body WP5 through the bearing WP2. In this case, the mechanical seal MS is pressed into the water pump WP in the rotatable shaft WP3 so that a second case member 2 side of the mechanical seal MS reaches a predetermined portion of the pump body WP5 and a first case member 1 side of the mechanical seal MS reaches a predetermined position of the rotatable shaft WP3.

When each of the first case member 1 side of the mechanical seal MS and the second case member 2 side of the mechanical seal MS is arranged at the predetermined position respectively, each position in the axial direction of the rotatable shaft WP3 of the first case member 1 side of the mechanical seal MS and the second case member 2 side of the mechanical seal MS is fixed. In this state, since the wave spring 4 urges the second seal member 5 against the first seal member 3 by means of the urging force (the compressed spring force), the first case member 1 is kept in a state that the inclining end portion 1c does not make contact with the inner circumferential portion 6d of the inner flange 6c of the transmitting member 6 and the first seal member 3 and the second seal member 5 are kept in a liquidtightly connected state. The wave spring 4 is so adjusted that a degree of closely contact of the first seal member 3 and the second seal member 5 can be kept generally in a degree of an initial condition even though at least one of the first seal member 3 and the second seal member 5 is worn away.

When the water pump WP into which this mechanical seal MS is incorporated and that is incorporated into the engine EG is activated, the rotatable shaft WP3 rotates and the impeller WP1 also rotates, and then the coolant circulates in a cooling system, not shown in drawings, of the engine EG through the water jacket WJ. When the rotatable shaft WP3 rotates, the first seal member 3 rotates and the second seal member 5 stands still. Since the coolant is separated between a side of the water jacket WJ and a side of the bearing WP2 by the first seal member 3, the second seal member 5 and the bellows 8, there is no chance that the coolant leaks from the side of the water jacket WJ to the side of the bearing WP2.

As mentioned, since the wave spring 4 that urges the second seal member 5 against the first seal member 3 is arranged concentrically with the second seal member 5 at an outside position separated from the second seal member 5, a thickness of the mechanical seal MS in the axial direction can be reduced generally by half compared with a thickness of a conventional mechanical seal. As a result of this, the rotatable shaft WP3 of the water pump WP can be shortened, thereby to downsize the engine EG. This makes it possible to increase a degree of freedom in designing a shape of a body for automobiles.

In the above-mentioned embodiment, the wave spring 4 is explained to be arranged outside of the second seal member 5 and the first seal member 3, however, the wave spring 4 may be arranged inside of the second seal member 5 and the first seal member 3. More specifically, in accordance with the present claimed invention, the urging member such as the wave spring 4 or a coil spring is arranged at a side (outside or inside) of the first seal member 3 and/or the second seal member 5. In other words, at least a part of the urging member overlaps the first seal member 3 and/or the second seal member 5 in a direction of its thickness at a side of the first seal member 3 and/or the second seal member 5. More concretely, for example, the second seal member 5 is arranged concentrically with the urging member at a position that is separated from the urging member and that locates inside of the urging member and within a thickness of the urging member, or the urging member is arranged concentrically with the first seal member 3 and the second seal member 5 at a position that locates outside of the first seal member 3 and the second seal member 5 and within a total thickness of the first seal member 3 and the second seal member 5. With this arrangement, it is so arranged that an urging force of the urging member can be transmitted to the second seal member 5 through the transmitting member 6. In addition, with this arrangement, it is avoided to arrange the first seal member 3, the second seal member 5 and the urging member so that the thickness of the first seal member 3 and the second seal member 5 in the direction of the rotatable shaft is added to the thickness of the urging member. As a result of this, the thickness of the mechanical seal MS in the direction of the rotatable shaft can be made thin.

A concrete arrangement of each component is not limited to the above-mentioned embodiment, and there may be various modifications without departing from a spirit of this invention.

A mechanical seal comprises a first case member that is mounted on a rotatably supported rotatable shaft and that rotates together with the rotatable shaft, a second case member that is mounted on a member supporting the rotatable shaft and that forms a space between the first case member and the second case member, a first seal member that is mounted on the first case member, an urging member that is mounted on the second case member, a second seal member that is arranged pushed concentrically with the first seal member and that is pushed against the first seal member with being urged in an axial direction of the rotatable shaft by the urging member, and a transmitting member that transmits an urging force of the urging member to the second seal member, and the urging member is arranged both concentrically with the second seal member and near the second seal member in its radial direction.

## Claims

1. A mechanical seal comprising; a first case member that is mounted on a rotatably supported rotatable shaft and that rotates together with the rotatable shaft,
a second case member that is mounted on a member supporting the rotatable shaft and that forms a space between the first case member and the second case member,
a first seal member that is mounted on the first case member,
an urging member that is mounted on the second case member, the urging member being arranged both concentrically with the second seal member and near the second seal member in its radial direction,
a second seal member that is arranged concentrically with the first seal member and that is pushed against the first seal member with being urged in an axial direction of the rotatable shaft by the urging member, and
a transmitting member that transmits an urging force of the urging member to the second seal member.

2. The mechanical seal described in claim 1, wherein the urging member locates outside of the second seal member.

3. The mechanical seal described in claim 1 or claim 2, wherein the urging member is a wave spring.
